# EUROPÄISCHE PATENTANMELDUNG

(11) **EP 3 196 154 A1**
(43) Veröffentlichungstag der Anmeldung: **26.07.2017**
(21) Anmeldenummer: 16152431.9
(22) Anmeldetag: 22.01.2016
(51) Int. Cl.: B65G 47/24, B65G 13/10

(54) **FÖRDERSYSTEM FÜR GÜTER UMFASSEND EINE AUSRICHTUNGSVORRICHTUNG**

(71) Anmelder: Siemens Aktiengesellschaft, 80333 München (DE)
(72) Erfinder: Roeltgen, Maximilian Uli Joachim, 79379 Müllheim (DE); Lentes, Felix, 53879 Euskirchen (DE); Umbach, Max, 88045 Friedrichshafen (DE)
(74) Vertreter: Maier, Daniel Oliver

(57) **Zusammenfassung**

Die Erfindung offenbart ein Fördersystem (4) zum Transport von Gütern (6), insbesondere von Paketen, Gepäckstücken und Luftfrachtgütern, entlang einer Haupttransportrichtung (8) auf einer Transportebene (10), umfassend mindestens eine Ausrichtungsvorrichtung (2). Die mindestens eine Ausrichtungsvorrichtung (2) umfasst frei drehbar gelagerte und antreibbare Transportelemente (12). Die Transportelemente (12) sind ausgestaltet, in einem tragenden Kontakt mit den Gütern (6) zu sein und die Ausrichtungsvorrichtung (2) weist eine im Wesentlichen orthogonal zur Transportebene (10) angeordnete Drehachse (14) auf, um welche die Ausrichtungsvorrichtung (2) rotierbar ist. Die Ausrichtungsvorrichtung (2) ermöglicht eine gleichzeitige Ausrichtung und Beförderung eines Gutes (6).

## Beschreibung

Die Erfindung bezieht sich auf eine Ausrichtungsvorrichtung für Güter, insbesondere Pakete, Gepäckstücke und Luftfrachtgüter und betrifft das technische Gebiet der Fördersysteme zum Transport von Gütern.

In Fördersystemen müssen Güter, insbesondere Pakete, Gepäckstücke und Luftfrachtgüter, häufig in einer bestimmten Orientierung vorliegen, wozu sie durch entsprechende Vorrichtungen um ihre vertikale Achse gedreht bzw. ausgerichtet werden müssen. Dies ist beispielsweise erforderlich in Fördersystemen, welche zur Verladung, zur Zwischen- und/ oder Endspeicherung, zur automatisierten Gütererkennung und für Sortierprozesse verwendet werden. Vorteilhafterweise unterbricht die Ausrichtung nicht den Güterstrom und stellt so keinen Engpass des Fördersystems dar. Darüber hinaus sollten die Güter während der Ausrichtung schonend behandelt und somit nicht beschädigt werden. Es gibt verschiedene Ansätze zur Ausrichtung von Gütern. Im Paketbereich werden beispielsweise Leitbleche und in einem Winkel hierzu angeordnete Rollenbahnen verwendet. Andere Lösungen verwenden mehrere neben- und/ oder hintereinander angeordnete, individuell ansteuerbare Antriebsmittel. Auch Kugelrollentische mit individuell ansteuerbaren und antreibbaren Kugelrollen werden zur Ausrichtung verwendet.

Bei der Lösung mit den Leitblechen können die Güter an ebendiesen beschädigt werden und darüber hinaus sind die Möglichkeiten der individuellen Ausrichtung einzelner Güter beschränkt. Zur Überwachung von Position und Ausrichtung der Güter sind bei den oben genannten Lösungen aufwendige Detektionssysteme erforderlich. Die individuelle Ansteuerung erfordert mehrere Antriebe und ist darüber hinaus nicht trivial.

Der vorliegenden Erfindung liegt daher die Aufgabe zugrunde, eine zuverlässige und rasche Ausrichtung eines mit einem Fördersystem transportierten Gutes technisch leicht realisierbar zu ermöglichen. Diese Aufgabe wird durch die in dem unabhängigen Anspruch beschriebene Lösung gelöst.

Die erfindungsgemäße Lösung sieht ein Fördersystem zum Transport von Gütern, insbesondere von Paketen, Gepäckstücken und Luftfrachtgütern, entlang einer Haupttransportrichtung auf einer Transportebene, umfassend mindestens eine Ausrichtungsvorrichtung vor. Die mindestens eine Ausrichtungsvorrichtung umfasst frei drehbar gelagerte und antreibbare Transportelemente. Die Transportelemente sind ausgestaltet, in einem tragenden Kontakt mit den Gütern zu sein und die Ausrichtungsvorrichtung weist eine im Wesentlichen orthogonal zur Transportebene angeordnete Drehachse auf, um welche die Ausrichtungsvorrichtung rotierbar ist.

Um eine zuverlässige Ausrichtung zu erreichen und/ oder um eine plane Auflagefläche für die Güter zu bieten und/ oder um eine zu starke Beanspruchung der Transportelemente und des Gutes zu verhindern, können die Transportelemente entlang einer Länge und/ oder Breite der Ausrichtungsvorrichtung angeordnet sein. Derart können die Transportelemente ein kugelrollentischartiges Fördersystem ausbilden. Abstände und Geometrie können an die mit dem jeweiligen Fördersystem beförderten Güter angepasst sein, so dass eine besonders leichte und sanfte Ausrichtung erfolgen kann. Typischerweise sollte ein Gut sowohl längs als auch quer auf je mindestens drei Transportelementen aufliegen.

Um eine vollständige Beweglichkeit der Transportelemente und eine stets gleichartige Wechselwirkung zwischen Transportelement und Gut unabhängig von einer Orientierung der Transportelemente sicher zu stellen, können die Transportelement Transportelemente und/ oder Transportkugeln sein. Dadurch bietet die Ausrichtungsvorrichtung eine noch größere Variabilität und Flexibilität.

Um die Transportelemente der Ausrichtungsvorrichtung und als Folge mittels Reibkontakt ein Gut, welches sich in tragendem Kontakt mit den Transportelementen befindet, anzutreiben, kann das Fördersystem mindestens ein Antriebsmittel, insbesondere ein Förderband, umfassen, mit welchem ein oder mehrere Transportelemente antreibbar sind. Dies ist besonders effizient, wenn mit einem Antriebsmittel mehrere Transportelemente gemeinsam antreibbar sind. Ein Förderband ist technisch besonders einfach realisierbar und bietet den Transportelementen darüber hinaus eine stets gleiche Auflagefläche.

Gemäß einer vorteilhaften Ausführungsform kann das mindestens eine Antriebsmittel unterhalb der Transportebene angeordnet sein und die Transportelemente berühren. Derart angeordnet besteht ein direkter Kontakt von Antriebsmittel und Transportelementen, welcher ein besonders einfaches Antreiben der Transportelemente mittels Reibkontakt von unten ermöglicht.

Um die Haupttransportrichtung des Gutes zu verändern und somit einen noch breiteren Einsatzbereich der Ausrichtungsvorrichtung zu ermöglichen, kann das mindestens eine Antriebsmittel um eine weitere, parallel zur Drehachse der Ausrichtungsvorrichtung angeordnete Achse drehbar sein. Auf diese Weise kann zusätzlich zu einer Änderung der Ausrichtung des Gutes die Haupttransportrichtung auf besonders einfache Art und Weise variiert werden mit dem Resultat, dass das Gut seitlich verschoben werden kann. Die Ausrichtungsvorrichtung kann somit als Eckumsetzer mit beliebiger Winkeleinstellung verwendet werden.

Um einen aktiven und/ oder gelenkten Transport, insbesondere eine Ausrichtung, von Gütern auf der Transportebene mittels der Transportelemente besonders einfach zu ermöglichen, kann das Fördersystem einen oder mehrere Antriebe umfassen, mit welchem die Ausrichtungsvorrichtung rotierbar und/ oder das mindestens eine Antriebsmittel antreibbar sind. Bei einer schrägen Transportebene kann ein Transport entlang der Haupttransportrichtung auch mittels Schwerkraftförderung bewerkstelligt werden.

Um die Ausrichtung und/ oder den Transport eines Gutes zu überwachen, kann das Fördersystem mindestens einen Detektor umfassen, mit welchem Position und/ oder Ausrichtung eines Gutes detektierbar sind. Vor Passieren der Ausrichtungsvorrichtung kann eine Detektion des Gutes erfolgen. Ausgehend von der detektierten Ausrichtung kann unter Annahme einer bestimmten Haftung zwischen Gut und Transportelementen berechnet werden, mit welcher Geschwindigkeit und/ oder um welchen Winkel und/ oder in welche Rotationsrichtung die Ausrichtungsvorrichtung rotiert werden muss, um eine gewünschte Ausrichtung zu erzielen. Alternativ oder zusätzlich kann detektiert werden, während das Gut auf der Ausrichtungsvorrichtung aufliegt und diese rotiert wird. Sobald die gewünschte Ausrichtung erreicht ist, wird die Rotation gestoppt, so dass das Gut nur noch in die Haupttransportrichtung transportiert wird.

Gemäß einer vorteilhaften Ausführungsform kann das Fördersystem eine Ansteuerelektronik umfassen. Mit Hilfe der Ansteuerelektronik kann das Fördersystem besonders einfach überwacht und angesteuert werden.

Gemäß einer weiteren vorteilhaften Ausführungsform kann die Ansteuerelektronik ausgestaltet sein, das Fördersystem, insbesondere den einen oder die mehreren Antriebe, anzusteuern. Auf diese Weise können das Fördersystem, insbesondere der eine oder die mehreren Antriebe und somit die Ausrichtungsvorrichtung, mit Hilfe der Ansteuerelektronik kontrolliert werden, wodurch die Güter auf besonders einfache Art und Weise gezielt ausgerichtet und positioniert werden können.

Um das Fördersystem, insbesondere den einen oder die mehreren Antriebe, mit besonders geringem Betriebsaufwand anzusteuern, kann die Ansteuerelektronik für ein automatisiertes Ansteuern adaptiert sein. So kann kostenintensives Betriebspersonal eingespart werden.

Um unabhängig von der Einstellung der drehbar ausgestalteten Ausrichtungsvorrichtung einen stets gleichen Übergang zwischen Ausrichtungsvorrichtung und restlichem Fördersystem sicher zu stellen, kann die Ausrichtungsvorrichtung als Drehscheibe ausgestaltet sein.

Um einen möglichsten guten Schutz der Bauteile des Fördersystems unterhalb der Transportebene zu erzielen und um zu verhindern, dass sich die Güter im Fördersystem verfangen und dabei beschädigt werden, kann eine Abdeckung unterhalb der Transportebene angeordnet sein, wobei die Abdeckung eine Aussparung für jedes Transportelement umfasst. Zusätzlich schützt die Abdeckung vor Verunreinigungen von Bauteilen und Antrieben, die eine aufwendige Wartung nach sich ziehen können, welche mit erhöhten Kosten und untätigen Wartezeiten verbunden ist.

Um durch äußerst reibungsarme Bewegung der Transportelemente bedingt einen besonders effiziente Transport der Güter zu ermöglichen, kann das Fördersystem Lager, insbesondere Wälzlager, zur Lagerung der Transportelemente umfassen. Eine Ausgestaltung des Lagers als Gleitlager wäre ebenfalls möglich. Das Wälzlager kann beispielsweise als Kugellager ausgestaltet sein.

Gemäß einer weiteren vorteilhaften Ausführungsform kann das Antriebsmittel ausgestaltet sein, durch ein Antreiben der Transportelemente ein Gut im Wesentlichen in die Haupttransportrichtung zu befördern und die Ausrichtungsvorrichtung ausgestaltet sein, durch eine Rotation der Ausrichtungsvorrichtung ein Gut im Wesentlichen auszurichten. Da eine separate Ansteuerung des Antreibens der Transportelemente und eine Rotation der Ausrichtungsvorrichtung problemlos möglich ist, können so gezielt sowohl Positionierung als auch Ausrichtung verändert werden. Das Drehen des Gutes kann im laufenden Betrieb erfolgen, da durch die gleichzeitige Positionierung und Ausrichtung ein Gut nicht erst angehalten werden muss. So weist die Ausrichtungsvorrichtung einen besonders hohen Durchsatz auf.

Bevorzugte Ausführungsformen der Erfindung werden nachfolgend anhand der Figuren beispielsweise näher erläutert. Dabei zeigen:
- Figur 1: eine Aufsicht auf eine Ausrichtungsvorrichtung eines Fördersystems; und
- Figur 2: eine seitliche Ansicht eines Fördersystems mit einer Ausrichtungsvorrichtung.

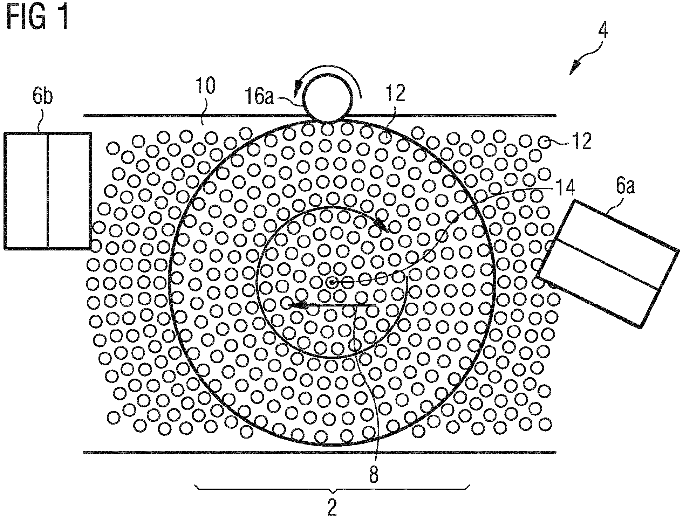

Figur 1 zeigt gemäß einer bevorzugten Ausführungsform der Erfindung eine Aufsicht auf eine Ausrichtungsvorrichtung 2 eines Fördersystems 4 auf dem ein Gut 6 entlang einer Haupttransportrichtung 8 auf einer Transportebene 10 transportiert wird. Dargestellt wird das Gut 6 vor Passieren der Ausrichtungsvorrichtung 2 als Gut 6a und nach Passieren der Ausrichtungsvorrichtung 2 als ausgerichtetes Gut 6b.

Die Ausrichtungsvorrichtung 2 umfasst frei drehbar gelagerte und antreibbare, als Transportkugeln ausgestaltete Transportelemente 12, welche ausgestaltet sind, in einem tragenden Kontakt mit dem Gut 6 zu sein und dieses zu transportieren. Insbesondere da die Transportelemente 12 als Transportkugeln ausgestaltet sind, sind sie äußerst tragfähige Laufelemente, die zugleich eine sehr geringe Rollreibung aufweisen. Die Haupttransportrichtung 8 ist beliebig einstellbar. Zur Lagerung der Transportelemente 12 umfasst das Fördersystem 4 Lager, die eine freie Drehbarkeit der Transportelemente 12 mit geringen Reibungsverlusten ermöglichen. Eine technisch gängige Lösung, die auch bei schweren Gütern 6 ein müheloses Antreiben der Transportelemente 12 ermöglicht, sind Wälzlager. Transportkugeln stellen eine besonders vorteilhafte Ausführungsform dar, da sie unabhängig von ihrer Orientierung ein Gut 6 stets gleichartig transportieren und technisch besonders einfach gemeinsam antreibbar sind. Aber auch Transportrollen, insbesondere wenn sie zumindest in einem für einen Kontakt mit den Gütern 6 vorgesehen Bereich eine umlaufende kugeloberflächenartige Oberfläche aufweisen, können als Transportelemente 12 zum Einsatz kommen.

Die Transportelemente 12 sind entlang einer Länge und Breite der Ausrichtungsvorrichtung 2 angeordnet und bilden so einen antreibbaren Kugelrollentisch aus. Die Ausrichtungsvorrichtung 2 umfasst eine im Wesentlichen orthogonal zur Transportebene 10 und orthogonal zur Haupttransportrichtung 8 angeordnete Drehachse 14, um welche die Ausrichtungsvorrichtung 2 rotierbar ist. So ausgestaltet ist die Ausrichtungsvorrichtung 2 adaptiert, das Gut 6 gleichzeitig auszurichten und in die Haupttransportrichtung 8 zu befördern. Die Ausrichtungsvorrichtung 2 ist als Drehscheibe ausgestaltet, so dass sich zwischen Ausrichtungsvorrichtung 2 und Fördersystem 4 ein stets gleicher, möglichst sanfter Übergang befindet, der möglichst wenig Möglichkeiten zum Verkanten von Gütern 6 bietet.

Nun werden die Transportelemente 12 angetrieben, so dass sie das Gut 6 in die Haupttransportrichtung 8 befördern. In der Aufsicht der zeichnerischen Darstellung von Figur 1 entspricht das einer Bewegung der Transportelemente 12 nach rechts - genau entgegengesetzt zur Haupttransportrichtung 8. Technisch besonders einfach durchführbar ist ein Antreiben der Transportelemente 12 mit einem in der Aufsicht nicht dargestellten, als Förderband ausgestalteten Antriebsmittel 18, welches adaptiert ist, ein oder mehrere Transportelemente 12 anzutreiben. Das Antriebsmittel 18 ist unterhalb der Transportebene 10 angeordnet und berührt die Transportelemente 12, so dass diese mittels Reibkontakt antreibbar sind. So ist das Antriebsmittel 18 ausgestaltet, durch ein Antreiben der Transportelemente 12 das Gut 6 im Wesentlichen in die Haupttransportrichtung 8 zu befördern. Weitere Arten der Kraftübertragung von Antriebsmittel 18 auf die Transportelemente 12 sind prinzipiell auch möglich. Durch eine Drehung des Antriebsmittels 18 um eine weitere Achse, welche parallel zur Drehachse 14 der Ausrichtungsvorrichtung 2 angeordnet ist oder mit dieser übereinstimmt, ist die Haupttransportrichtung 8 einstellbar. So kann die Ausrichtungsvorrichtung 2 auch als Eckumsetzer verwendet werden.

Bei stillstehendem Antriebsmittel 18 ist die Ausrichtungsvorrichtung 2 als Arbeitstisch verwendbar.

Unabhängig von einer Winkeleinstellung der Ausrichtungsvorrichtung 2 sind bei einem Förderband Antriebsmittel 18 und die als Transportkugeln ausgestalteten Transportelemente 12 in stets gleichartigem Kontakt, so dass eine Antreibgeschwindigkeit des Antriebsmittels 18 das Gut 6 mit eben dieser transportiert. Die Lager müssen einen direkten Kontakt zwischen Antriebsmittel 18 und Transportelementen 12 ermöglichen, im Falle von Wälzlagern beispielsweise durch Aussparungen am unteren Rand der Transportelemente 12.

Auf dem übrigen Fördersystem 4 wird das Gut 6 ebenfalls auf Transportelementen 12 transportiert. Diese Transportelemente 12 können prinzipiell ebenfalls mit demselben Antriebsmittel 18 angetrieben werden. Andere Möglichkeiten zum Transportieren des Gutes 6 auf dem Fördersystem 4 umfassen Förderbänder, Rollentische und Transportrutschen.

Mit Hilfe eines am Rand der Ausrichtungsvorrichtung 2 angeordneten Antriebs 16a wird die Ausrichtungsvorrichtung 2 im Uhrzeigersinn rotiert. Ein besonders einfaches Antreiben kann beispielsweise erfolgen, wenn hierzu Antrieb 16a und Ausrichtungsvorrichtung 2 ineinander greifende Zahnräder umfassen. Durch Rotation werden alle Transportelemente 12 der Ausrichtungsvorrichtung 2 bewegt, ohne dass jedes Transportelement 12 einzeln angesteuert und angetrieben werden muss. Derart ist die Ausrichtungsvorrichtung 2 ausgestaltet, durch eine Rotation der Ausrichtungsvorrichtung 2 ein Gut 6 im Wesentlichen auszurichten.

Wenn die Ausrichtungsvorrichtung 2 mit einer Rotationsgeschwindigkeit rotiert wird, rotieren die Transportelemente 12 der Ausrichtungsvorrichtung 2 mit und verändern ihre Position, da sie auf dem Antriebsmittel 18 aufliegen. Es kommt zu einer Überlagerung unterschiedlicher Geschwindigkeiten, so dass die Transportelemente 12 unterschiedlich schnell laufen. Die in der zeichnerischen Darstellung oberhalb der Drehachse 14 angeordneten Transportelemente 12 rotieren schneller, die unterhalb der Drehachse 14 angeordneten Transportelemente 12 rotieren langsamer. Ein Transportelement 12 wird durch die Rotation der Ausrichtungsvorrichtung 2 umso stärker beeinflusst, je weiter es von der Drehachse 14 entfernt ist. Durch die unterschiedlichen Geschwindigkeiten der Transportelemente 12 wird das auf der Ausrichtungsvorrichtung 2 aufliegende Gut 6 gedreht, wobei eine Drehung nur so lange stattfindet, wie die Ausrichtungsvorrichtung 2 rotiert wird. Wie sehr das Gut 6 gedreht und somit ausgerichtet werden kann, hängt bei gegebenen Transportelementen 12 vom Verhältnis Rotationsgeschwindigkeit und Antreibgeschwindigkeit, sowie vom Größenverhältnis zwischen Gut 6 und Ausrichtungsvorrichtung 2 ab. Vorteilhafterweise ist die Ausrichtungsvorrichtung 2 mindestens doppelt so breit wie das Gut 6 selber, so dass bei hinreichend schneller Rotation eine beliebige Ausrichtung des Gutes 6 erzielt werden kann.

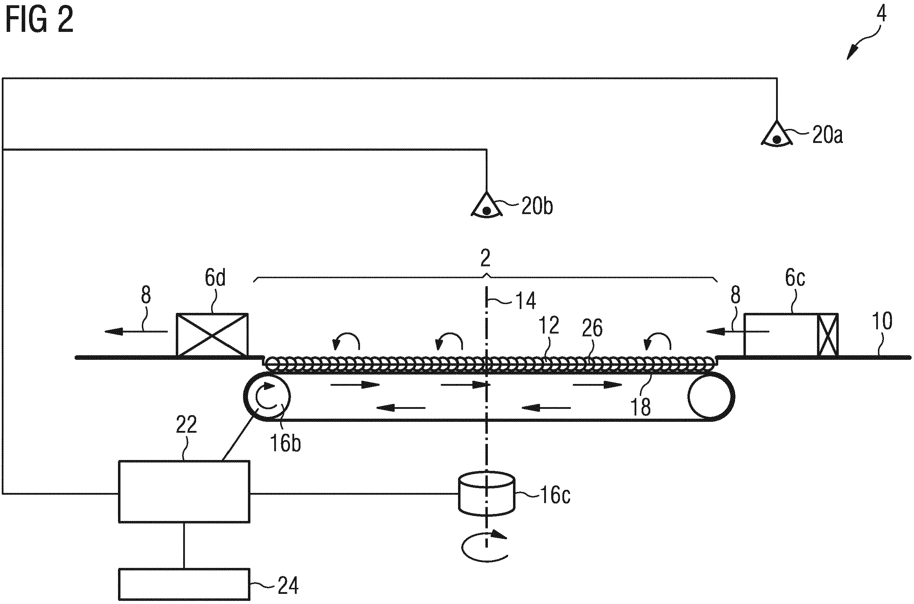

Figur 2 zeigt eine seitliche Ansicht eines Fördersystems 4 mit einer Ausrichtungsvorrichtung 2 gemäß einer bevorzugten Ausführungsform der Erfindung. Dargestellt wird wie in Figur 1 ein identisches Gut 6 als nicht ausgerichtetes Gut 6c vor und als ausgerichtetes Gut 6d nach Passieren der Ausrichtungsvorrichtung 2. Wie die in Figur 1 dargestellte Ausrichtungsvorrichtung 2 weist die Ausrichtungsvorrichtung 2 eine Drehachse 14 auf und umfasst als Transportkugeln ausgestaltete Transportelemente 12, welche von einem als umlaufendes Förderband ausgestalteten Antriebsmittel 18 angetrieben werden. Das Fördersystem 4 umfasst zwei Antriebe 16b, 16c und wird von dem Antrieb 16b angetrieben. Mit dem konzentrisch um die Drehachse 14 angeordneten Antriebsmittel 18 ist die Ausrichtungsvorrichtung 2 rotierbar.

Das Fördersystem 4 umfasst eine Ansteuerelektronik 22 und zwei oberhalb der Transportebene 10 angeordnete Detektoren 20a, 20b, welche adaptiert sind, Position und/ oder Ausrichtung des Gutes 6 zu detektieren. Die Detektoren 20a, 20b und die Antriebe 16b, 16c sind mit der Ansteuerelektronik 22 verbindbar. Der erste Detektor 20a ist vor der Ausrichtungsvorrichtung 2 angeordnet und insbesondere adaptiert, das Gut 6 vor Passieren der Ausrichtungsvorrichtung 2 zu detektieren. Der zweite Detektor 20b ist adaptiert, das Gut 6 auf der Ausrichtungsvorrichtung 2 zu detektieren und ist hierzu oberhalb der Ausrichtungsvorrichtung 2 angeordnet. Prinzipiell könnte auch einer der beiden Detektoren 20a, 20b das Gut 6 sowohl vor als auch auf der Ausrichtungsvorrichtung 2 detektieren, allerdings ist die Genauigkeit bei Verwendung mehrerer Detektoren 20a, 20b meist besser, insbesondere da die Detektoren 20a, 20b einen für ihre jeweilige Aufgabe optimierten Blickwinkel aufweisen.

Die Ansteuerelektronik 22 ist ausgestaltet, das Fördersystem 4 anzusteuern, insbesondere die Antriebe 16b, 16c. Dadurch kann das Gut 6 mit Hilfe der Ansteuerelektronik 22 zentral ausgerichtet und gleichzeitig befördert werden.

Die Ansteuerelektronik 22 ist für ein automatisiertes Ansteuern adaptiert. Um ein intelligentes Ansteuern zu ermöglichen, umfasst das Fördersystem 4 ein mit der Ansteuerelektronik 22 assoziiertes Logikmodul 24. Das Logikmodul 24 ist adaptiert, basierend auf der von den Detektoren 20a, 20b ermittelten Position und/ oder Ausrichtung des Gutes 6 das Ansteuern mit der Ansteuerelektronik 22 zu bestimmen.

Unterschiedliche Vorgehensweisen können verfolgt werden, um die gewünschte Ausrichtung des Gutes 6 zu erzielen. Einerseits kann bei bekannter Position und Ausrichtung eines Gutes 6 unter Annahme einer maximalen oder zumindest einer konstanten Haftung zwischen Transportelementen 12 und Gut 6 berechnet werden, mit welcher Geschwindigkeit und wie sehr und mit welchem Drehsinn die Ausrichtungsvorrichtung 2 rotiert werden muss. Erzielte und gewünschte Ausrichtung stimmen bei hinreichend guter Berechnung mit guter Genauigkeit überein, so dass eine Überprüfung der erzielten Ausrichtung mit Hilfe des zweiten Detektors 20b nicht zwingend erforderlich ist. Die Position und Ausrichtung eines Gutes 6 können mit Hilfe des ersten Detektors 20a bestimmt worden sein. Alternativ kann sie bei kontrollierter Zuführung, beispielsweise über schräg angeordnete Transportrutschen mit Leitblechen, auch vorrangig bekannt sein. In diesem Fall muss für das Ansteuern nur der Zeitpunkt der Zuführung bekannt sein, wozu beispielsweise eine direkt vor der Ausrichtungsvorrichtung 2 installierte Lichtschranke oder in die Transportebene 10 integrierte Lichttaster oder aber der erste Detektor 20a verwendet werden kann.

Alternativ kann das Gut 6 mit Hilfe des zweiten Detektors 20b überwacht werden, während es auf der Ausrichtungsvorrichtung 2 transportiert und eventuell noch zusätzlich ausgerichtet wird. Die Rotation der Ausrichtungsvorrichtung 2 wird mit Hilfe der Ansteuerelektronik 22 gestoppt, sobald die gewünschte Ausrichtung des Gutes 6 erreicht ist. Voraussetzung für dieses Vorgehen ist, dass Rotationsgeschwindigkeit der Ausrichtungsvorrichtung 2 und ihre Ausmaße eine vollständige Rotation des Gutes 6 erlauben. Für eine noch bessere Genauigkeit und/ oder Fehlersicherheit, können die mit Hilfe beider Detektoren 20a, 20b erzielten Informationen verwendet werden. Die Ansteuerelektronik 22 kann kontinuierlich, insbesondere auf stroboskopische Weise, mit Hilfe des Logikmoduls 24 die erzielte Ausrichtung überprüfen. Nur bei Abweichung von der Berechnung erfolgt ein Eingreifen in die berechnete Ansteuerung. Die Detektoren 20a, 20b können auch zur zeitnahen Detektion von Störungen verwendet werden.

Die Ansteuerelektronik 22 ist für ein automatisiertes Ansteuern adaptiert. Für ein besonders unkompliziertes Ansteuern ist das Logikmodul 24 adaptiert, Abweichungen von berechneter und/ oder erwarteter Position und/ oder Ausrichtung an die Ansteuerelektronik 22 zu übermitteln.

Unterhalb der Transportebene 10 ist eine Abdeckung 26 angeordnet. Die Abdeckung 26 kann als einfaches Abdeckblech ausgestaltet sein und umfasst eine Aussparung für jedes Transportelement 12. Derart sind Güter 6 und/ oder Ausrichtungsvorrichtung 2 vor durch Verkanten eventuell verursachten Beschädigungen und/ oder Betriebsausfällen geschützt. Lager und bewegte Teile werden darüber hinaus vor Dreck und Verunreinigungen geschützt, so dass der Wartungsaufwand des Fördersystems 4 so gering wie möglich gehalten wird.

Um das Gut 6 unter Verwendung der Ausrichtungsvorrichtung 2 umzusetzen, also gleichzeitig auszurichten und entlang der Haupttransportrichtung 8 zu befördern, wird zunächst Position und/ oder Ausrichtung des Gutes 6 erfasst, insbesondere mittels mindestens einem der zwei Detektoren 20a, 20b. Im Anschluss wird der Antrieb 16b des Antriebsmittels 18 und der Antrieb 16c der Ausrichtungsvorrichtung 2 angesteuert, vorzugsweise mittels der Ansteuerelektronik 22. Dadurch erfolgt eine Rotation von Ausrichtungsvorrichtung 2 und des Gutes 6 während das Gut 6 gleichzeitig in die Haupttransportrichtung 8 befördert wird. So wird ein hoher Durchsatz der Ausrichtungsvorrichtung 2 ermöglicht, ohne dass - zumindest bei ausreichendem Teilungsabstand - das Gut 6 angehalten werden muss.

### Bezugszeichenliste

- 2: Ausrichtungsvorrichtung
- 4: Fördersystem
- 6: Gut
- 8: Haupttransportrichtung
- 10: Transportebene
- 12: Transportelement
- 14: Drehachse
- 16: Antrieb
- 18: Antriebsmittel
- 20: Detektor
- 22: Ansteuerelektronik
- 24: Logikmodul
- 26: Abdeckung

## Patentansprüche

1. Fördersystem (4) zum Transport von Gütern (6), insbesondere von Paketen, Gepäckstücken und Luftfrachtgütern, entlang einer Haupttransportrichtung (8) auf einer Transportebene (10), umfassend mindestens eine Ausrichtungsvorrichtung (2), **dadurch gekennzeichnet, dass**
a) die mindestens eine Ausrichtungsvorrichtung (2) frei drehbar gelagerte und antreibbare Transportelemente (12) umfasst;
b) die Transportelemente (12) ausgestaltet sind, in einem tragenden Kontakt mit den Gütern (6) zu sein; und
c) die Ausrichtungsvorrichtung (2) eine im Wesentlichen orthogonal zur Transportebene (10) angeordnete Drehachse (14) aufweist, um welche die Ausrichtungsvorrichtung (2) rotierbar ist.

2. Fördersystem (4) nach Anspruch 1, **dadurch gekennzeichnet, dass**
die Transportelemente (12) entlang einer Länge und/ oder Breite der Ausrichtungsvorrichtung (2) angeordnet sind.

3. Fördersystem (4) nach einem der Ansprüche 1 bis 2, **dadurch gekennzeichnet, dass**
die Transportelemente (12) Transportrollen und/ oder Transportkugeln sind.

4. Fördersystem (4) nach einem der Ansprüche 1 bis 3, **dadurch gekennzeichnet, dass**
das Fördersystem (4) mindestens ein Antriebsmittel (18), insbesondere ein Förderband, umfasst, mit welchem ein oder mehrere Transportelemente (12) antreibbar sind.

5. Fördersystem (4) nach Anspruch 4, **dadurch gekennzeichnet, dass**
das mindestens eine Antriebsmittel (18) unterhalb der Transportebene (10) angeordnet ist und die Transportelemente (12) berührt.

6. Fördersystem (4) nach einem der Ansprüche 4 bis 5, **dadurch gekennzeichnet, dass**
das mindestens eine Antriebsmittel (18) um eine weitere, parallel zur Drehachse (14) der Ausrichtungsvorrichtung (2) angeordnete Achse drehbar ist.

7. Fördersystem (4) nach einem der Ansprüche 1 bis 6, **dadurch gekennzeichnet, dass**
das Fördersystem (4) einen oder mehrere Antriebe (16) umfasst, mit welchem die Ausrichtungsvorrichtung (2) rotierbar und/ oder das mindestens eine Antriebsmittel (18) antreibbar ist.

8. Fördersystem (4) nach einem der Ansprüche 1 bis 7, **dadurch gekennzeichnet, dass**
das Fördersystem (4) mindestens einen Detektor (20) umfasst, mit welchem Position und/ oder Ausrichtung eines Gutes (6) detektierbar sind.

9. Fördersystem (4) nach einem der Ansprüche 1 bis 8, **dadurch gekennzeichnet, dass**
das Fördersystem (4) eine Ansteuerelektronik (22) umfasst.

10. Fördersystem (4) nach Anspruch 9, **dadurch gekennzeichnet, dass**
die Ansteuerelektronik (22) ausgestaltet ist, das Fördersystem (4), insbesondere den einen oder die mehreren Antriebe (16), anzusteuern.

11. Fördersystem (4) nach Anspruch 10, **dadurch gekennzeichnet, dass**
die Ansteuerelektronik (22) für ein automatisiertes Ansteuern adaptiert ist.

12. Fördersystem (4) nach einem der Ansprüche 1 bis 11, **dadurch gekennzeichnet, dass**
die Ausrichtungsvorrichtung (2) als Drehscheibe ausgestaltet ist.

13. Fördersystem (4) nach einem der Ansprüche 1 bis 12, **dadurch gekennzeichnet, dass**
eine Abdeckung (26) unterhalb der Transportebene (10) angeordnet ist, wobei die Abdeckung (26) eine Aussparung für jedes Transportelement (12) umfasst.

14. Fördersystem (4) nach einem der Ansprüche 1 bis 13, **dadurch gekennzeichnet, dass**
das Fördersystem (4) Lager, insbesondere Wälzlager, zur Lagerung der Transportelemente (12) umfasst.

15. Fördersystem (4) nach einem der Ansprüche 1 bis 14, **dadurch gekennzeichnet, dass**
das Antriebsmittel (18) ausgestaltet ist, durch ein Antreiben der Transportelemente (12) ein Gut (6) im Wesentlichen in die Haupttransportrichtung (8) zu befördern, und die Ausrichtungsvorrichtung (2) ausgestaltet ist, durch eine Rotation der Ausrichtungsvorrichtung (2) ein Gut (6) im Wesentlichen auszurichten.
